# FASCICULE DE BREVET EUROPEEN

(11) **EP 4 292 166 B1**
(45) Date de publication et mention de la délivrance du brevet: **19.11.2025**
(21) Numéro de dépôt: 22707478.8
(22) Date de dépôt: 03.02.2022
(51) Int. Cl.: H01Q 1/08, H01Q 1/22, H01Q 1/27, H01Q 9/16, D02G 3/44, G06K 19/02, D02G 3/36, G06K 19/077

(54) **DISPOSITIF D'ÉMISSION-RÉCEPTION RADIOFRÉQUENCE ET SON PROCÉDÉ DE FABRICATION**
FUNKFREQUENZ-SENDE-EMPFANGSGERÄT UND VERFAHREN ZUR HERSTELLUNG DAVON
RADIOFREQUENCY TRANSCEIVER DEVICE AND METHOD FOR MANUFACTURING SAME

(30) Priorité: 15.02.2021 FR 2101414
(43) Date de publication de la demande: 20.12.2023
(73) Titulaire: PRIMO1D, 38000 Grenoble (FR)
(72) Inventeur: SETTE, Daniele, 38000 GRENOBLE (FR)
(74) Mandataire: IP Trust
(86) Numéro de dépôt international: PCT/FR2022/050216
(87) Numéro de publication internationale: WO 2022/171951

(56) Documents cités:
- WO-A1-2018/189013
- WO-A1-2019/151475
- CN-A- 107 122 815

## Description

### DOMAINE DE L'INVENTION

La présente invention concerne un dispositif d'émission réception radiofréquence, tel qu'une étiquette RFID (« RFID tag» selon la terminologie anglo-saxonne). Plus particulièrement, la présente invention concerne un dispositif d'émission réception radiofréquence souple, c'est-à-dire susceptible de se déformer élastiquement, et robuste. Un tel dispositif trouve une application dans le domaine de l'étiquetage d'objets, et tout particulièrement d'objets susceptibles de se déformer comme c'est par exemple le cas dans le domaine du textile.

### ARRIERE PLAN TECHNOLOGIQUE DE L'INVENTION

On connaît des documents US8471773, WO2016038342, WO2011161336, GB2472025, GB2472026, JP2013189718 ou WO2008080245, un dispositif incorporant une puce à semi-conducteur à un fil de nature textile, permettant ainsi de conférer à ce dispositif un facteur de forme filaire. Dans le document US2019391560, deux fils d'antenne formés de conducteurs électriques sont respectivement soudés aux plots d'une puce d'émission réception radiofréquence (RF) conformément à la mise en œuvre de la technologie « E-Thread^{™}».

Cette soudure peut être réalisée dans des rainures aménagées sur des faces latérales et opposées de la puce. Conventionnellement, le fil d'antenne est constitué d'un brin de matériau électriquement conducteur (ou d'une pluralité d'un tel brin), et il présente une section sensiblement circulaire dont le diamètre est typiquement compris entre 50 et 200 microns, ce qui permet de l'insérer dans une rainure formée sur un flanc de la puce, la hauteur de cette puce étant typiquement comprise entre 300 et 500 microns.

Quelle que soit la manière selon laquelle la connexion électrique entre les plots de la puce d'émission réception et le fil d'antenne est réalisée, cette connexion reste relativement fragile. C'est notamment le cas vis-à-vis des efforts de traction, de torsion, ou de cisaillement qui peuvent s'appliquer sur les fils d'antenne lorsque le dispositif d'émission réception est intégré dans un objet, ou au cours de son intégration dans cet objet.

Le document WO2018189013 divulgue une étiquette textile comprenant une étiquette RFID (« RFID tag » dans les termes de ce document) couplée à une antenne. L'antenne est retenue à l'étiquette textile en formant une boucle dans laquelle est positionné le tag RFID, assemblée à l'étiquette textile.

Le document CN107122815A décrit une étiquette RFID sous forme de fil pour la bande UHF.

Le document FR3059607 divulgue un module de communication radiofréquence pour pneumatique. Ce module est noyé dans un mélange de caoutchouc et comprend une antenne dite « rayonnante » présentant la forme d'un ressort hélicoïdal, ce ressort étant constitué d'un fil d'acier rigide plastiquement déformé. La longueur du ressort est choisie pour correspondre à la demi-longueur d'onde du signal de transmission du module de communication radiofréquence dans son environnement, la masse caoutchouteuse dans le cas de la divulgation de ce document. Le module comprend également un circuit électronique, encapsulé dans une masse rigide et comprenant, disposées sur un support PCB, une puce à semi-conducteur électriquement reliée à une antenne dite « primaire » formée d'une micro-bobine et dont l'impédance est adaptée à l'impédance de la puce à semi-conducteur. Cette puce met en œuvre les fonctions d'émission-réception radiofréquence du module, il peut notamment s'agir d'une puce RFID (de l'expression anglo-saxonne « Radio Frequency IDenditification ») permettant de mémoriser et de communiquer un numéro d'identification unique du module. Le circuit électronique est disposé dans ou contre l'antenne rayonnante pour permettre le couplage électromagnétique de l'antenne rayonnante et de l'antenne primaire.

Toutefois, le module de communication radiofréquence est particulièrement rigide et ne peut en aucun cas être intégré à un objet textile comme un vêtement. Cela est notamment dû à la nature même de l'antenne rayonnante, formée d'un fil d'acier déformé plastiquement, et donc excessivement rigide pour cette application.

### OBJET DE L'INVENTION

L'objet de la présente invention vise à résoudre au moins en partie les problèmes exposés ci-dessus. Plus particulièrement, un but de l'invention est de proposer un dispositif d'émission-réception radiofréquence souple, c'est-à-dire susceptible de se déformer en particulier vis-à-vis des efforts de flexion ou cisaillement qu'il peut subir, afin de pouvoir s'intégrer dans une pièce textile tel qu'un vêtement. Un autre but de l'invention est de proposer un dispositif d'émission-réception radiofréquence robuste, ne souffrant pas des problèmes de fragilité des connexions électriques entre l'antenne et la puce qui ont été exposés ci-dessus. Un autre but encore de l'invention est de fournir un procédé permettant la fabrication industrielle, en volume, d'un dispositif d'émission-réception souple.

### BREVE DESCRIPTION DE L'INVENTION

En vue de la réalisation de ce but, l'objet de l'invention propose un dispositif d'émission-réception radiofréquence selon la revendication 1

La nature essentiellement textile du dispositif d'émission réception radiofréquence assure son caractère souple, ce qui permet d'envisager son intégration dans des objets déformables.

Le dispositif d'émission-réception peut être incorporé dans une étiquette électronique pour faciliter cette intégration.

Selon d'autres caractéristiques avantageuses et non limitatives de l'invention, prises seules ou selon toute combinaison techniquement réalisable :
- la première antenne présente un premier axe, la deuxième antenne présente un deuxième axe, le premier axe et le deuxième axe étant parallèle entre eux ;
- le circuit électronique est adossé au fil d'âme textile ;
- le dispositif d'émission-réception radiofréquence comprend une couche d'adhésif entre le circuit électronique et le fil d'âme textile ;
- le circuit électronique est retenu assemblé au fil d'âme textile par un premier fil de couverture textile ou par l'élément textile conducteur enroulé en spires sur le fil d'âme textile et sur le circuit électronique ;
- l'élément textile conducteur est intégré dans une gaine textile, le circuit électronique et le fil d'âme textile étant disposés à l'intérieur de la gaine textile ;
- la gaine textile est un tissu, un tricot ou une tresse ;
- l'élément textile conducteur est enroulé directement sur le fil d'âme textile, le circuit électronique étant assemblé à une surface extérieure d'au moins une spire ;
- l'élément textile est un ruban ou un fil ;
- lequel l'élément textile conducteur présente un diamètre ou une épaisseur inférieure à 100 microns.
- Le dispositif d'émission-réception radiofréquence comprend une couche d'enrobage encapsulant le circuit électronique, le fil d'âme textile et l'élément textile ;
- Le dispositif d'émission-réception radiofréquence comprend un deuxième fil de couverture enroulé en spires autour du fil d'âme textile, du circuit électronique et de l'élément textile conducteur.

Selon un autre aspect, l'objet de l'invention propose un procédé de fabrication d'un dispositif d'émission-réception selon la revendication 9.

Selon d'autres caractéristiques avantageuses et non limitatives de l'invention, prises seules ou selon toute combinaison techniquement réalisable :
- l'étape d'assemblage comprend l'application d'un adhésif pour retenir la pluralité de circuits électroniques directement sur le fil d'âme textile ;
- l'étape d'assemblage comprend l'enroulement en spires d'un premier fil de couverture textile sur le fil d'âme textile et sur les circuits électroniques ;
- l'étape d'assemblage et l'étape de préparation sont réalisées simultanément en enroulant l'élément textile directement sur le fil d'âme textile et sur le circuit électronique ;
- l'étape de préparation comprend l'intégration de l'élément textile en spires non jointive dans une gaine textile de l'âme textile ;
- l'intégration de l'élément textile est réalisée par tissage, par tricotage ou par tressage de la gaine textile autour du fil d'âme textile à partir de fils textiles élémentaires, l'élément textile conducteur constituant l'un des fils élémentaires ;
- l'étape de préparation comprend l'enroulement de l'élément textile conducteur directement sur le fil d'âme textile, et l'étape d'assemblage, menée après l'étape de préparation, comprend l'assemblage de chaque circuit électronique à une surface extérieure d'au moins une spire de l'élément textile conducteur ;
- l'élément textile conducteur est un ruban ou un fil ;
- le procédé de fabrication comprend en outre une étape de recouvrement au cours de laquelle un deuxième fil de couverture est enroulé en spires autour du fil d'âme textile et de l'élément textile conducteur.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1a]
   [Fig. 1b]
   Les figure 1a, 1b représentent un dispositif d'émission réception selon un premier mode de mis en œuvre ;
[Fig. 2] La figure 2 représente un dispositif d'émission réception selon un deuxième mode de mis en œuvre ;
[Fig. 3] La figure 3 représente un circuit électronique d'un dispositif d'émission réception conforme à l'invention ;
[Fig. 4] La figure 4 représente schématiquement les principes généraux d'un procédé conforme à l'invention ;
[Fig. 5] La figure 5 représente schématiquement une étiquette électronique intégrant un dispositif d'émission-réception selon l'invention.

### DESCRIPTION DETAILLEE DE L'INVENTION

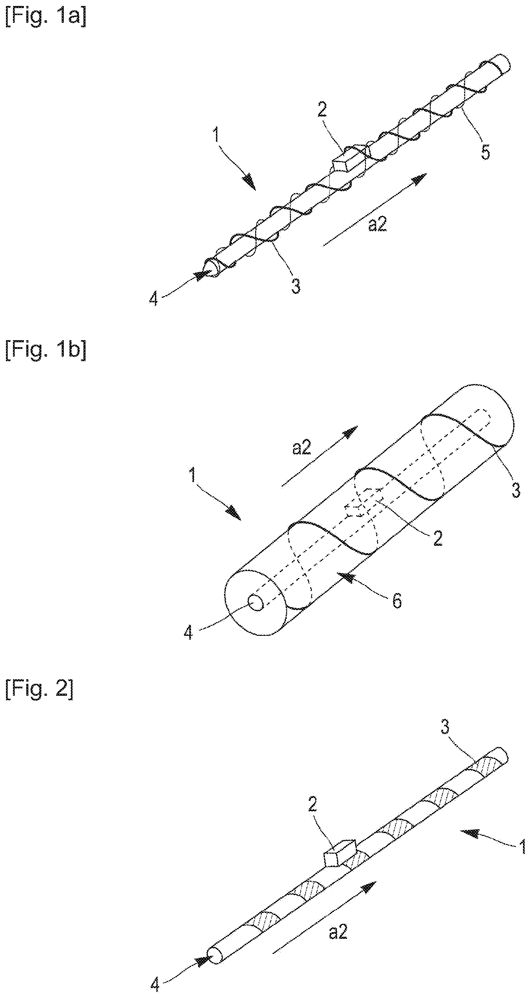

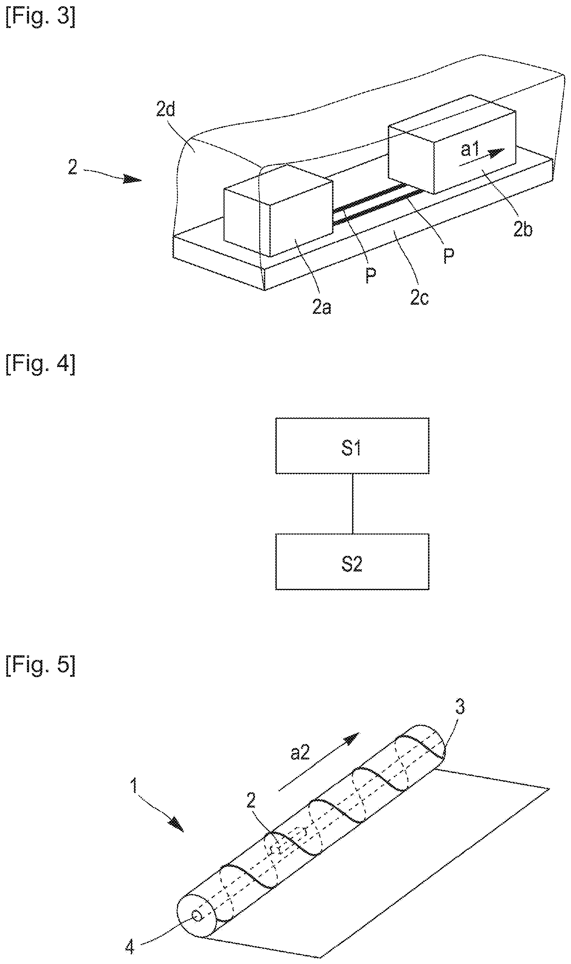

D'une manière très générale, et en référence aux figures 1a, 1b et 2 représentant plusieurs modes de mise en œuvre, un dispositif d'émission-réception radiofréquence 1 qui fait l'objet de la présente description comporte un circuit électronique 2 comprenant une puce d'émission-réception 2a et une première antenne 2b électriquement reliée à cette puce 2a. Il peut s'agir d'une puce 2a d'identification RFID, apte à détenir un identifiant et transmettre cet identifiant sur requête d'un interrogateur distant. Préférentiellement, la première antenne est une antenne magnétique, à champ proche. Elle peut être formée d'une bobine, ou plus généralement d'une boucle magnétique constituée d'une ou plusieurs spires. Elle peut prendre la forme d'un composant électronique intégré 2b comme cela est représenté sur la figure 3. La première antenne présente un premier axe d'antenne a1, par exemple un axe orienté selon la direction du champ magnétique généré ou induit par la boucle magnétique.

La puce 2a et l'antenne 2b peuvent être disposées sur un substrat 2c présentant des pistes de connexion électriques P, permettant donc de relier électriquement (galvaniquement) ces deux éléments, notamment lorsque l'antenne 2b se présente sous la forme d'un composant électronique intégré. Le support 2c peut être souple ou rigide. On peut prévoir également de relier ces deux composants par « wire bonding » (ou « liaison par fil » en français). La puce 2a, l'antenne 2b et, lorsqu'il est présent, le support 2c peuvent être encapsulés dans une matière isolante 2d, par exemple une résine ou une céramique, de manière à protéger mécaniquement et isoler électriquement le circuit 2. Les propriétés électromagnétiques de cette matière isolante (permittivités diélectrique et magnétique), peuvent être adaptées pour améliorer les performances du dispositif.

Quelle que soit la manière avec laquelle la puce d'émission-réception 2a et l'antenne 2b sont reliées entre eux pour former le circuit électronique 2, celui-ci présente une dimension très réduite. Ainsi, et de préférence, ce circuit est inscrit dans un parallélépipède dont la hauteur est typiquement comprise entre 0,5 et 2mm, la largeur comprise entre 0,5 et 2mm et la longueur comprise entre 4mm et 15mm, de préférence inférieurs à 10mm.

Le dispositif d'émission-réception 1 comporte également une seconde antenne formée d'un élément textile 3 en un matériau électriquement conducteur et disposé en spires non jointives autour et le long d'un fil d'âme textile 4. Le matériau conducteur de l'élément textile 3 formant l'antenne peut être en cuivre ou alliage de cuivre (laiton, bronze, cupro-nickel, CuAg, ...), acier, acier inoxydable, acier cuivré, nickel, en fibres métallisées (nylon argenté). Le matériau conducteur peut être revêtu d'un matériau conducteur de faible épaisseur, typiquement inférieure à 2 µm pour des usages RFID-UHF, pour améliorer la conduction électrique en périphérie par effet de peau ou bien apportant une protection contre la corrosion chimique comme l'or au l'argent. Le matériau conducteur de l'élément textile 3 peut être revêtu d'une couche isolante comme un émail pour le protéger chimiquement et mécaniquement. L'élément textile 3 peut se présenter sous la forme d'un fil conducteur de section ronde, ou polygonale, monobrin ou multibrin, d'un toron, ou d'un ruban, comme cela sera exposé dans les différents modes de mis en œuvre de l'invention. Il présente avantageusement un diamètre (pour un fil) ou une épaisseur (pour un ruban) inférieure à 100 microns.

Le fil d'âme textile 4 est quant à lui formé d'un matériau non conducteur et forme une structure de support pour les autres éléments du dispositif 1, et notamment pour la seconde antenne. Le fil d'âme textile 4 le long duquel est disposée, par enroulement, la seconde antenne présente une longueur sensiblement égale à une demi-longueur d'onde de la fréquence de transmission entre le dispositif 1 et l'interrogateur distant. Pour les fréquences de transmission usuelles, la longueur du fil d'âme est donc de l'ordre de 5 à 20 cm.

Avantageusement, le fil d'âme textile 4 est choisi pour présenter un caractère isolant électrique et extensible c'est-à-dire que dans ce cas le fil présente un pouvoir d'élongation élastique qui peut être supérieur ou égal à 5%, 20%, 50%, voire même à 100% de sa longueur au repos. Mais cette caractéristique n'est pas essentielle, et l'invention est parfaitement compatible avec un fil d'âme textile non extensible, par exemple présentant une élongation élastique inférieure à 5%.

A titre d'exemple, le fil d'âme textile 4 peut être composé à partir de fibres aramides, et ainsi former un fil multi-filament méta-aramides (par exemple connu sous la dénomination commerciale Nomex^{™}), un fil en fibres courtes ou longues méta-aramides, tel qu'un polyamide-imide (par exemple connu sous la dénomination commerciale Kermel^{™}). Il peut alternativement s'agir d'un fil PBO (poly(p-phénylène-2,6-benzobisoxazole)), connu sous la dénomination commerciale Zylon^{™}. Il peut également être formé à partir d'un polyester aromatique (par exemple connu sous la dénomination commerciale Vectran^{™}). Il peut également s'agir d'un fil formé d'un polymère tel que du PEAK (polyaryléthercétones), de fibres naturelles, de fibres de verres, de fibres de carbone, de fibres PPS (Polyphénylène Sulphide).

Le fil d'âme textile 4 peut être formé d'un matériau thermofusible ou être adhésif.

Le fil d'âme textile 4 présente avantageusement une section transversale circulaire et son diamètre est compris entre 10 microns et 500 microns.

La deuxième antenne est préférentiellement de nature électrique, et constitue typiquement une antenne dipôle. Par « antenne dipôle », on désigne toute antenne apte à se coupler à un interrogateur distant par la composante électrique du champ électromagnétique qui se propage entre ces deux éléments, et non par l'intermédiaire d'un champ magnétique inductif seul. Cette deuxième antenne présente un deuxième axe a2 s'étendant généralement selon la direction d'enroulement de l'élément textile conducteur 3 autour du fil d'âme 4. Ce deuxième axe a2 de l'antenne correspond à l'axe d'enroulement de l'élément textile. On note que cette seconde antenne présente une dimension bien plus importante que la première antenne.

Dans le dispositif d'émission-réception 1 le circuit électronique 2, comportant la première antenne, est disposé relativement à la seconde antenne pour permettre leur couplage électromagnétique. Le caractère non jointif des spires de l'élément textile conducteur 3 permet d'améliorer la valeur d'inductance de cet enroulement, et donc de favoriser ce couplage. Typiquement, il s'agit de disposer le circuit électronique 2 (qui porte la première antenne) vis-à-vis du fil d'âme textile 4 (qui porte la seconde antenne) de sorte que le premier axe a1 et le deuxième axe a2 soient parallèles entre eux. De préférence, pour favoriser la qualité du couplage, on cherchera à superposer ces deux axes ou à limiter la distance les séparant.

En conséquence de ce couplage électromagnétique, la seconde antenne, de grande dimension relative vis-à-vis de la première antenne, n'est pas reliée électriquement (galvaniquement) avec la puce d'émission-réception 2a comme c'est le cas dans certaines solutions de l'état de la technique. On évite donc les soudures ou autres liaisons mécaniques entre une antenne de relativement grande dimension et la puce, cette antenne étant susceptible de transmettre les efforts extérieurs qui s'exercent sur le dispositif au niveau de ces liaisons.

De plus, la très petite dimension du circuit électronique 2, combinée à la nature textile des autres éléments du dispositif d'émission réception, assure la nature souple de ce dispositif, ce qui permet de l'intégrer dans des pièces textiles telles que des vêtements.

Ces principes peuvent être mis en œuvre selon plusieurs modes de mise en œuvre qui font l'objet de la suite de cette description.

### Premier mode de mise en œuvre.

Dans ce premier mode de mise en œuvre, qui fait l'objet des figures 1a et 1b, le circuit électronique 2 est adossé au fil d'âme textile, c'est-à-dire qu'il est directement retenu sur ce fil d'âme textile 4. L'élément textile conducteur 3, préférentiellement un fil textile en matériau conducteur, est enroulé autour de l'âme textile 4 et du circuit électronique 2. Ce fil textile peut être monobrin ou multibrin. Mais dans une variante, l'élément textile conducteur 3 peut prendre la forme d'un ruban. Ce mode de mise en œuvre est avantageux en ce qu'il permet de placer le dispositif électronique 2 à l'intérieur du volume engendré par les enroulements de l'élément textile 3 conducteur et, en conséquence, le premier axe a1 et le deuxième axe a2 des antennes sont disposés au plus proche l'un de l'autre.

On peut ainsi prévoir d'assembler le circuit 2 au fil d'âme 4 par l'intermédiaire d'un adhésif, en disposant par exemple une couche de cet adhésif entre le circuit 2 et le fil d'âme 4. Dans certaines variantes, il n'est pas nécessaire de dispenser cet adhésif, et le fil d'âme 4 lui-même peut être formé d'un matériau adhésif ou développer des propriétés adhésives par l'intermédiaire d'un traitement particulier. C'est notamment le cas d'un fil d'âme en matériau thermofusible, auquel on peut faire adhérer le circuit électronique 2 après l'avoir échauffé.

Alternativement ou en complément à cet assemblage par adhésion, on peut prévoir que le circuit électronique 2 soit retenu assemblé au fil d'âme textile 4 par un premier fil de couverture textile 5 ou par l'élément textile 3 lui-même. Selon une telle approche, le premier fil de couverture textile 5 ou l'élément textile conducteur 3 est enroulé en spires sur le fil d'âme textile et sur le circuit électronique, pour le retenir plaqué au fil d'âme 4 et emprisonné dans les spires.

L'élément textile conducteur 3 qui forme la seconde antenne n'est pas nécessairement enroulé nu autour du fil d'âme textile : cet élément textile conducteur 3 peut former l'un des fils textiles élémentaires d'une gaine textile 6, par exemple une gaine tissée, tressée ou tricotée à partir de ces fils textiles élémentaires. Dit autrement, dans cette variante de réalisation du premier mode de mise œuvre, le fil d'âme 4 portant le circuit électronique 2 est recouvert d'une gaine textile 6 dans laquelle est intégré l'élément textile conducteur 3 formant la deuxième antenne. On peut d'ailleurs prévoir dans ce mode de réalisation d'intégrer une pluralité d'éléments textiles conducteurs dans la gaine 6, chacun de ces éléments étant enroulés en spire non jointive autour du fil d'âme textile.

Mais dans tous les cas et quelle que soit la forme prise par l'élément filaire conducteur 3, intégré ou non dans une gaine textile, celui-ci est disposé en spires non jointives autour et le long du fil d'âme textile 4.

La fabrication d'un dispositif d'émission-réception selon ce premier mode de mise en œuvre peut être réalisé à grande cadence, par un procédé de fabrication collective d'une pluralité de dispositifs 1. Ce procédé comprend ainsi une étape d'assemblage S1 d'une pluralité de circuits électroniques 2 sur un fil d'âme textile de grande dimension, de sorte à les espacer les uns des autres le long de ce fil. On choisira un espacement au moins égal à longueur d'antenne, de manière à pouvoir prélever dans le fil d'âme textile de grande dimension un dispositif d'émission réception 1 fonctionnel. Au cours de cet assemblage, on prend soin d'orienter le circuit électronique 2 pour disposer le premier axe a1 de la première antenne sensiblement parallèle au fil d'âme (qui définit sensiblement l'axe a2 de la seconde antenne) .

Comme on l'a vu, l'étape d'assemblage S1 peut correspondre à un collage du circuit électronique sur le fil d'âme textile de grande dimension. Ce fil peut se dévider d'une bobine par séquences successives, tout en restant maintenu en tension. Au cours de chaque séquence, le fil s'immobilise devant un équipement d'insertion (« pick and place » selon la terminologie du métier) afin d'y assembler un circuit électronique 2 dont une surface a préalablement été encollée. Alternativement, le fil d'âme de grande dimension peut être pourvu ponctuellement d'une couche d'adhésif à l'aide d'une buse de dispense, avant d'y placer le circuit 2 à l'aide de l'équipement d'insertion. Le fil de grande dimension muni des circuits électroniques 2 peut être récupéré sur une bobine de réception, dans l'attente des prochaines étapes du procédé.

Alternativement ou en complément à cet assemblage par collage, on peut prévoir de retenir les circuits électroniques 2 sur le fil d'âme textile de grande dimension, par enroulement en spires d'au moins un premier fil de couverture textile 5 sur le fil d'âme textile de grande dimension et sur les circuits électroniques, par exemple par une technique de guipage. Pour rappel, et selon cette technique, on tire le fil d'âme de grande dimension à travers une bobine creuse en rotation portant le fil de couverture. Le fil d'âme de grande dimension traverse la bobine creuse selon une direction verticale en le tirant vers le haut ou vers le bas. Le fil de couverture se dévide de la bobine creuse et s'enroule de façon hélicoïdale autour de l'âme pour former des spires. Il est fréquent d'enrouler une pluralité de fils de couverture autour de l'âme, par exemple en disposant les deux bobines creuses l'une au-dessus de l'autre et en faisant circuler l'âme à travers chacune des bobines entraînées en rotation dans un même sens ou dans un sens opposé. En amenant un circuit électronique par l'intermédiaire d'une gouttière au niveau d'un ballon de guipage, on peut le disposer entre le fil d'âme textile et le fil de couverture.

On peut bien entendu combiner les deux approches, et prévoir à la fois le collage des circuits électroniques 2 sur le fil d'âme textile de grande dimension et son guipage par au moins un premier fil de couverture 5.

Reprenant la description du procédé fabrication du dispositif d'émission-réception, celui-ci comprend ensuite une étape de préparation S2 de la seconde antenne à partir de l'élément textile en matériau électriquement conducteur. Cette étape de préparation peut mettre en œuvre une étape de guipage, c'est-à-dire l'enroulement en spires (non jointive dans ce cas) de l'élément textile conducteur sur le fil d'âme textile de grande dimension et sur les circuits électroniques 2 (et sur le premier fil de couverture 5, si un tel premier fil a été prévu).

Selon une approche particulièrement avantageuse du procédé du fait de sa simplicité, l'étape d'assemblage S1 et l'étape de préparation S2 sont réalisés simultanément en enroulant l'élément textile conducteur directement sur le fil d'âme textile de grande dimension et sur le circuit électronique 2 afin de l'y assembler et le retenir sur le fil d'âme.

L'étape de préparation S2 de la seconde antenne, qu'elle soit réalisée après ou simultanément à l'étape d'assemblage S1, ne met pas nécessairement en œuvre une étape de guipage. Ainsi, et selon une approche particulière, l'élément textile conducteur 3 est intégré en spires non jointives dans une gaine textile 6 du fil d'âme 4.

L'intégration de l'élément textile conducteur peut être réalisée par tissage, par tricotage ou par tressage de la gaine textile 6 autour du fil d'âme textile de grande dimension portant les circuits électroniques 2 à partir de fils textiles élémentaires, l'élément textile conducteur constituant l'un au moins de ces fils élémentaires.

A l'issue des étapes d'assemblage S1 et de préparation S2, on dispose donc d'un fil ou d'un ruban textile de grande longueur, qui peut être collecté dans une bobine de stockage, ce fil ou ce ruban textile étant composé d'une pluralité de dispositifs d'émission-réception 1 reliés entre eux. On peut singulariser ces dispositifs 1 en prélevant des sections successives du fil ou du ruban textile. On choisira avantageusement les points de découpe du fil ou du ruban textile de grande longueur pour positionner les circuits électroniques 2 sensiblement à milongueur du fil d'âme textile 4 des dispositifs 1 singularisés.

### Deuxième mode de mise en œuvre.

Dans ce deuxième mode de mis en œuvre, dont un exemple est représenté sur la figure 2, le circuit électronique 1 est adossé à l'élément textile conducteur 3, c'est-à-dire que l'élément textile conducteur 3 est enroulé en spires directement sur le fil d'âme textile 4, le circuit électronique 2 est quant à lui assemblé à une surface extérieure d'au moins une spire. Le circuit électronique 2 est donc disposé à l'extérieur du volume engendré par les enroulements de l'élément textile conducteur 3.

Le circuit électronique 2 peut être assemblé par collage à une spire au moins de l'élément textile conducteur 3, ou retenu par tout autre moyen. Le circuit électronique peut s'étendre sur plusieurs spires de l'élément textile conducteur 3 afin de favoriser le couplage entre la première et la deuxième antenne.

L'élément textile conducteur 3 de ce mode de mise en œuvre peut prendre la forme d'un ruban ou d'un fil. Par « ruban » on désigne un film allongé, souple et plat. Ce ruban peut, par exemple, être constitué d'un fil métallique laminé. Ce ruban est enroulé contre le fil d'âme textile 4, légèrement serré contre ce fil d'âme textile 4. Il n'est pas nécessaire de prévoir de matière adhésive entre le fil d'âme textile 4 et le ruban.

Le ruban est constitué en un matériau électriquement conducteur qui peut être un métal ou d'une pluralité de métaux (par exemple du cuivre, du laiton, du bronze, cupro-nickel, un alliage de cuivre comportant plus de 96% en masse de cuivre, du nickel). Il peut s'agir d'un fil métallique laminé. Dans ce cas, et avantageusement, ce laminage est réalisé à froid. Préférentiellement, il n'est pas suivi de recuit thermique. Ce procédé de laminage augmente l'écrouissage du matériau constituant le ruban, et donc sa résistance à la fatigue.

On peut prévoir que ce ruban soit constitué d'une couche principale en un premier matériau, cette couche principale étant recouverte sur au moins une de ses faces d'un revêtement conducteur ou isolant électrique. Ainsi, la couche principale peut être en acier revêtue d'un revêtement réalisé dans un matériau choisi dans le groupe constitué des matériaux suivants : argent, or, cuivre, étain, nickel, laiton, zinc et alliages d'étain.

Alternativement, la couche principale peut être réalisée dans un matériau choisi dans le groupe constitué des matériaux suivants : acier inoxydable, un alliage de nickel dans lequel le nickel représente à lui seul au moins 45% de la masse de l'alliage, d'un alliage de titane dans lequel le titane représente à lui seul au moins 70% de la masse de l'alliage, nickel.

Le revêtement peut présenter une résistivité électrique inférieure à celle du matériau formant la couche principale. Il peut être choisi pour ses propriétés anticorrosion, par exemple être constitué d'argent. Le revêtement peut être formé par dépôt sur la couche principale, avant ou après une étape de laminage, comme cela a été présenté dans un paragraphe précédent. Le revêtement peut également être un isolant électrique, par exemple un émail, afin de protéger mécaniquement et/ou chimiquement le ruban.

Quelle que soit la nature choisie du ruban, celui-ci présente une épaisseur faible, inférieure à 50 microns, et typiquement comprise entre 5 microns et 20 microns, et avantageusement entre 5 microns et 10 microns, de manière à pouvoir être suffisamment flexible pour être enroulé en spires sur le fil d'âme textile 4. Il est apte à se déformer élastiquement ou plastiquement. Typiquement, le ruban présente une épaisseur 10 à 20 fois, voire 30 fois, inférieure au diamètre du fil d'âme textile 4. Le ruban peut présenter une largeur comprise entre 40 microns et 200 microns, sans que toutefois cette caractéristique ne forme une limitation quelconque.

La fabrication d'un dispositif d'émission-réception 1 selon ce second mode de mise en œuvre est relativement simple, et s'appuie sur les mêmes étapes S1, S2 de fabrication collective que celles décrites pour la fabrication d'un dispositif 1 conforme au premier mode de mis en œuvre.

Ainsi, un tel procédé comprend tout d'abord l'étape de préparation S2 de la seconde antenne à partir de l'élément textile 3 en matériau électriquement conducteur. Cette étape de préparation S2 peut mettre en œuvre une étape de guipage de l'élément textile sur le fil d'âme de grande dimension ou la réalisation d'une gaine textile directement sur ce fil d'âme, la réalisation de cette gaine (par tressage, tricotage, ou tissage par exemple) intégrant l'élément textile conducteur s'enroulant en spires non jointives autour du fil d'âme de grande dimension.

Le procédé de fabrication comprend ensuite une étape d'assemblage S1 d'une pluralité de circuits électroniques 2 sur une surface extérieure d'au moins une spire de l'élément textile 3, de sorte à les espacer les uns des autres le long du fil. On choisit un espacement au moins égal à longueur d'antenne, de manière à pouvoir prélever un dispositif d'émission réception 1 fonctionnel. Au cours de cet assemblage, tout comme dans le premier mode de mis en œuvre, on prend soin d'orienter le circuit électronique pour disposer le premier axe a1 de la première antenne sensiblement parallèle au fil d'âme (qui définit l'axe a2 de la seconde antenne).

Cet assemblage peut être réalisé par collage, par guipage d'au moins fil de couverture, tout comme dans le premier mode de mis en œuvre.

A l'issue de ces étapes, on dispose donc d'un fil textile de grande longueur, qui peut être collecté dans une bobine de stockage, ce fil textile étant formé d'une pluralité de dispositifs d'émission-réception 1 reliés entre eux. On peut singulariser ces dispositifs en prélevant des sections successives du fil textile, comme cela a été exposé en relation avec la description du procédé de fabrication d'un dispositif d'émission-réception selon le premier mode de mis en œuvre.

Bien entendu l'invention n'est pas limitée aux modes de mise en œuvre décrits et on peut y apporter des variantes de réalisation sans sortir du cadre de l'invention tel que défini par les revendications.

Ainsi, on peut prévoir de protéger le dispositif d'émission-réception en le munissant d'une couche d'enrobage, encapsulant le circuit électronique, le fil d'âme textile et l'élément textile. Il peut notamment s'agir de polyuréthane ou de silicone. La couche d'enrobage peut être formée par extrusion sur le dispositif d'émission-réception.

Par ailleurs, un dispositif d'émission réception qui a fait l'objet de la présente description peut être incorporé directement dans un produit, par exemple un produit textile tel qu'un vêtement. Mais ce dispositif peut trouver d'autres domaines d'application que celui du textile, et il pourrait être avantageux pour l'étiquetage électronique de tout type de produit, notamment ceux présentant une certaine souplesse.

Le dispositif peut être intégré directement, par exemple en le tissant, brodant ou en le cousant dans une pièce textile. Mais il peut être intégré préalablement à une étiquette pour faciliter son intégration comme cela est décrit dans le document FR2002785.

Le dispositif peut également être intégré dans une étiquette prenant d'autres formes que celle prévue dans ce document, par exemple dans un passepoil, d'un biais gansé ou une queue de rat ou tout autre type de pièces textile à coudre.

On rappelle que ces types de pièces textiles à coudre sont généralement formées d'un ruban replié en tube sur un paquet de fils textiles ou un cordon formant bourrage. Dans le cas de la présente invention, le ruban peut être replié sur le dispositif d'émission-réception, par exemple lorsqu'il se trouve sous la forme d'un fil textile de grande dimension avant sa singularisation, ce fil textile de grande dimension contribuant au bourrage du tube.

## Revendications

1. Dispositif d'émission-réception radiofréquence (1) comprenant :
- un circuit électronique (2) comprenant une puce (2a) et une première antenne (2b) électriquement reliée à la puce (2a) ;
- un fil d'âme textile (4) formé d'un matériau non conducteur ;
- une seconde antenne formée d'un élément textile (3) en un matériau électriquement conducteur et disposé en spires non jointives autour et le long du fil d'âme textile (4);
le circuit électronique (2) étant assemblé sur le fil d'âme textile (4) et disposé relativement à la seconde antenne pour permettre le couplage électromagnétique de la première antenne (2a) et de la deuxième antenne.

2. Dispositif d'émission-réception radiofréquence (1) selon la revendication précédente dans lequel la première antenne (2b) présente un premier axe (a1), la deuxième antenne présente un deuxième axe (a2), le premier axe (a1) et le deuxième axe (a2) étant parallèles entre eux.

3. Dispositif d'émission-réception radiofréquence (1) selon l'une des revendications précédentes dans lequel le circuit électronique (2) est adossé et retenu au fil d'âme textile (4) par adhésion et/ou par un premier fil de couverture textile ou par l'élément textile conducteur (3) enroulé en spires sur le fil d'âme textile (4) et sur le circuit électronique (2).

4. Dispositif d'émission-réception radiofréquence (1) selon la revendication précédente dans lequel l'élément textile conducteur (3) est intégré dans une gaine textile (6), le circuit électronique (2) et le fil d'âme textile (4) étant disposée à l'intérieur de la gaine textile (6).

5. Dispositif d'émission-réception radiofréquence (1) selon l'une des revendications 1 à 2 dans lequel l'élément textile conducteur (3) est enroulé directement sur le fil d'âme textile (4), le circuit électronique (2) étant assemblé à une surface extérieure d'au moins une spire.

6. Dispositif d'émission-réception radiofréquence (1) selon la revendication précédente dans lequel l'élément textile conducteur (3) est un ruban ou un fil.

7. Dispositif d'émission-réception radiofréquence (1) selon l'une des revendications précédentes comprenant un deuxième fil de couverture enroulé en spires autour du fil d'âme textile (4), du circuit électronique (2) et de l'élément textile conducteur (3).

8. Etiquette électronique comprenant un dispositif d'émission-réception radiofréquence (1) selon l'une des revendications précédentes.

9. Procédé de fabrication d'un dispositif d'émission-réception radiofréquence (1), le procédé comprenant :
- Une étape d'assemblage (S1) d'une pluralité de circuits électroniques (2) sur un fil d'âme textile, de sorte à les espacer les uns des autres le long du fil d'âme textile, les circuits électroniques (2) comprenant chacun une puce (2a) et une première antenne électriquement (2b) reliée à la puce (2a) ;
- Une étape de préparation (S2) d'une seconde antenne formée d'un élément textile (3) en un matériau électriquement conducteur et disposé en spires non jointives autour du fil d'âme textile (4).

10. Procédé de fabrication selon la revendication précédente dans lequel l'étape d'assemblage (S1) comprend l'application d'un adhésif pour retenir la pluralité de circuits électroniques (2) directement sur le fil d'âme textile (4).

11. Procédé de fabrication selon la revendication 9 ou 10 dans lequel l'étape d'assemblage (S1) comprend l'enroulement en spires d'un premier fil de couverture textile sur le fil d'âme textile (4) et sur les circuits électroniques (2).

12. Procédé de fabrication selon la revendication 9 dans lequel l'étape d'assemblage (S1) et l'étape de préparation (S2) sont réalisés simultanément en enroulant l'élément textile conducteur (3) directement sur le fil d'âme textile (4) et sur le circuit électronique (2).

13. Procédé de fabrication selon l'une des revendications 9 à 12 dans lequel l'étape de préparation (S2) comprend l'intégration de l'élément textile conducteur (3) en spires non jointives dans une gaine textile (6) de l'âme textile (4).

14. Procédé de fabrication selon la revendication 9 dans lequel l'étape de préparation (S2) comprend l'enroulement de l'élément textile conducteur (3) directement sur le fil d'âme textile (4), et l'étape d'assemblage (S1), menée après l'étape de préparation (S2), comprend l'assemblage de chaque circuit électronique (2) à une surface extérieure d'au moins une spire de l'élément textile conducteur (3).

15. Procédé de fabrication selon l'une des revendications 9 à 14 dans lequel l'élément textile conducteur (3) est un ruban ou un fil.

16. Procédé de fabrication selon l'une des revendications 9 à 15 comprenant en outre une étape de recouvrement au cours de laquelle un deuxième fil de couverture est enroulé en spires autour du fil d'âme textile (4) et de l'élément textile conducteur (3).

## Patentansprüche

1. Funkfrequenz-Sende-Empfangsgerät (1), umfassend:
- eine elektronische Schaltung (2) umfassend einen Chip (2a) und eine erste Antenne (2b), die elektrisch mit dem Chip (2a) verbunden ist ;
- ein textiles Kerngarn (4), das aus einem nicht leitenden Material gebildet ist;
- eine zweite Antenne, die aus einem Textilelement (3) aus einem elektrisch leitenden Material gebildet wird und in nicht aneinanderstoßenden Windungen um und entlang des textilen Kerngarns (4) angeordnet ist;
wobei die elektronische Schaltung (2) auf dem textilen Kerndraht (4) zusammengebaut und relativ zur zweiten Antenne angeordnet ist, um die elektromagnetische Kopplung der ersten Antenne (2a) und der zweiten Antenne zu ermöglichen.

2. Funkfrequenz-Sende-Empfangsgerät (1) nach dem vorstehenden Anspruch, bei der die erste Antenne (2b) eine erste Achse (a1) aufweist, die zweite Antenne eine zweite Achse (a2) aufweist, wobei die erste Achse (a1) und die zweite Achse (a2) parallel zueinander sind.

3. Funkfrequenz-Sende-Empfangsgerät (1) nach einem der vorstehenden Ansprüche, bei der die elektronische Schaltung (2) an das textile Kerngarn (4) angelehnt ist und durch Adhäsion und/oder durch ein erstes textiles Deckgarn oder durch das leitende Textilelement (3), das in Windungen auf das textile Kerngarn (4) und auf die elektronische Schaltung (2) gewickelt ist, gehalten wird.

4. Funkfrequenz-Sende-Empfangsgerät (1) nach dem vorstehenden Anspruch, bei der das leitende Textilelement (3) in eine Textilhülle (6) integriert ist, wobei die elektronische Schaltung (2) und das textile Kerngarn (4) im Inneren der Textilhülle (6) angeordnet sind.

5. Funkfrequenz-Sende-Empfangsgerät (1) nach einem der Ansprüche 1 bis 2, bei der das leitende Textilelement (3) direkt auf das textile Kerngarn (4) gewickelt ist, wobei die elektronische Schaltung (2) an einer Außenfläche mindestens einer Windung angebracht ist.

6. Funkfrequenz-Sende-Empfangsgerät (1) nach dem vorstehenden Anspruch, bei der das leitende Textilelement (3) ein Band oder ein Faden ist.

7. Funkfrequenz-Sende-Empfangsgerät (1) nach einem der vorstehenden Ansprüche, die ein zweites Deckgarn umfasst, der in Windungen um das textile Kerngarn (4), die elektronische Schaltung (2) und das leitende Textilelement (3) gewickelt ist.

8. Elektronisches Etikett umfassend ein Funkfrequenz-Sende-Empfangsgerät (1) nach einem der vorstehenden Ansprüche.

9. Verfahren zur Herstellung eines Funkfrequenz-Sende-Empfangsgeräts (1), das Verfahren umfassend:
- Ein Schritt des Zusammenfügens (S1) einer Vielzahl von elektronischen Schaltungen (2) auf einem textilen Kerngarn, so dass sie entlang des textilen Kerngarns voneinander beabstandet sind, wobei die elektronischen Schaltungen (2) jeweils einen Chip (2a) und eine erste Antenne (2b), die elektrisch mit dem Chip (2a) verbunden ist, umfassen ;
- Ein Schritt zur Vorbereitung (S2) einer zweiten Antenne, die aus einem Textilelement (3) aus einem elektrisch leitenden Material gebildet wird und in nicht aneinanderstoßenden Windungen um das textile Kerngarn (4) herum angeordnet ist.

10. Verfahren zur Herstellung nach dem vorstehenden Anspruch, bei dem der Schritt des Zusammenfügens (S1) das Aufbringen eines Klebstoffs zum Halten der Vielzahl von elektronischen Schaltungen (2) direkt auf das textile Kerngarn (4) umfasst.

11. Verfahren zur Herstellung nach Anspruch 9 oder 10, bei dem der Schritt des Zusammenfügens (S1) das Wickeln eines ersten textilen Deckgarns in Windungen auf das textile Kerngarn (4) und auf die elektronischen Schaltungen (2) umfasst.

12. Verfahren zur Herstellung nach Anspruch 9, bei dem der Zusammenfügungsschritt (S1) und der Vorbereitungsschritt (S2) gleichzeitig durchgeführt werden, indem das leitende Textilelement (3) direkt auf das textile Kerngarn (4) und auf die elektronische Schaltung (2) gewickelt wird.

13. Verfahren zur Herstellung nach einem der Ansprüche 9 bis 12, bei dem der Vorbereitungsschritt (S2) das Einbetten des leitfähigen Textilelements (3) in nicht aneinanderstoßenden Windungen in eine Textilhülle (6) des Textilkerns (4) umfasst.

14. Verfahren zur Herstellung nach Anspruch 9, wobei der Vorbereitungsschritt (S2) das Wickeln des leitenden Textilelements (3) direkt auf das textile Kerngarn (4) umfasst, und der nach dem Vorbereitungsschritt (S2) durchgeführte Montageschritt (S1) das Anbringen jeder elektronischen Schaltung (2) an einer Außenfläche von mindestens einer Windung des leitenden Textilelements (3) umfasst.

15. Verfahren zur Herstellung nach einem der Ansprüche 9 bis 14, bei dem das leitende Textilelement (3) ein Band oder ein Garn ist.

16. Verfahren zur Herstellung nach einem der Ansprüche 9 bis 15, weiter umfassend einen Abdeckungsschritt, bei dem ein zweites Deckgarn in Windungen um das textile Kerngarn (4) und das leitende Textilelement (3) gewickelt wird.

## Claims

1. A radiofrequency transceiver device (1) comprising:
- an electronic circuit (2) comprising a chip (2a) and a first antenna (2b) electrically connected to the chip (2a);
- a textile core thread (4) formed from a non-conductive material;
- a second antenna formed from a textile element (3) made of an electrically-conductive material and arranged in non-contiguous turns around and along the textile core thread (4); the electronic circuit (2) being assembled on the textile core thread (4) and arranged relative to the second antenna to allow electromagnetic coupling of the first antenna (2a) and the second antenna.

2. The radiofrequency transceiver device (1) according to the preceding claim, wherein the first antenna (2b) has a first axis (a1), the second antenna has a second axis (a2), the first axis (a1) and the second axis (a2) being parallel to each other.

3. The radiofrequency transceiver device (1) according to one of the preceding claims, wherein the electronic circuit (2) is up against and held on the textile core thread (4) by adhesion and/or by a first textile covering thread or by the conductive textile element (3) wound in turns on the textile core thread (4) and on the electronic circuit (2).

4. The radiofrequency transceiver device (1) according to the preceding claim, wherein the conductive textile element (3) is incorporated in a textile sheath (6), the electronic circuit (2) and the textile core thread (4) being disposed inside the textile sheath (6).

5. The radiofrequency transceiver device (1) according to one of claims 1 to 2, wherein the conductive textile element (3) is wound directly onto the textile core thread (4), the electronic circuit (2) being assembled on an outer surface of at least one turn.

6. The radiofrequency transceiver device (1) according to the preceding claim, wherein the conductive textile element (3) is a ribbon or a thread.

7. The radiofrequency transceiver device (1) according to one of the preceding claims, comprising a second covering thread wound in turns around the textile core thread (4), the electronic circuit (2) and the conductive textile element (3).

8. An electronic tag comprising a radiofrequency transceiver device (1) according to one of the preceding claims.

9. A manufacturing method for a radiofrequency transceiver device (1), the method comprising:
- A step (S1) of assembling a plurality of electronic circuits (2) on a textile core thread, so as to space them apart from each other along the textile core thread, the electronic circuits (2) each comprising a chip (2a) and a first antenna (2b) electrically connected to the chip (2a);
- A step (S2) of preparing a second antenna formed from a textile element (3) made from an electrically-conductive material and arranged in non-contiguous turns around the textile core thread (4).

10. The manufacturing method according to the preceding claim, wherein the assembly step (S1) comprises applying an adhesive to hold the plurality of electronic circuits (2) directly on the textile core thread (4).

11. The manufacturing method according to claim 9 or 10, wherein the assembly step (S1) comprises winding a first textile covering thread in turns around the textile core thread (4) and on the electronic circuits (2).

12. The manufacturing method according to claim 9, wherein the assembly step (S1) and the preparation step (S2) are performed simultaneously by winding the conductive textile element (3) directly on the textile core thread (4) and on the electronic circuit (2).

13. The manufacturing method according to one of claims 9 to 12, wherein the preparation step (S2) comprises integrating the conductive textile element (3) in non-contiguous turns in a textile sheath (6) of the textile core (4).

14. The manufacturing method according to claim 9, wherein the preparation step (S2) comprises winding the conductive textile element (3) directly over the textile core thread (4), and the assembly step (S1), conducted after the preparation step (S2), comprises assembling each electronic circuit (2) at an external surface of at least one turn of the conductive textile element (3).

15. The manufacturing method according to one of claims 9 to 14, wherein the conductive textile element (3) is a ribbon or a thread.

16. The manufacturing method according to one of claims 9 to 15, further comprising a covering step in which a second covering thread is wound in turns around the textile core thread (4) and the conductive textile element (3).
